# EUROPÄISCHE PATENTANMELDUNG

(11) **EP 3 501 641 A1**
(43) Veröffentlichungstag der Anmeldung: **26.06.2019**
(21) Anmeldenummer: 17209987.1
(22) Anmeldetag: 22.12.2017
(51) Int. Cl.: B01J 31/22, C08G 18/48, C08G 18/71, C08G 18/75, C08G 18/10, C08G 18/22, C08G 18/38, C08L 75/08, C08G 18/28

(54) **FEUCHTIGKEITSHÄRTENDE ZUSAMMENSETZUNGEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Ein Verfahren zur Herstellung von Alkoxysilangruppen enthaltenden Polyurethanen umfasst den Schritt der Reaktion von einer wenigstens eine NCO-Gruppe enthaltenden Verbindung mit einer wenigstens ein Zerewitinoff-aktives H-Atom enthaltenden Verbindung in Gegenwart einer Katalysatorkomponente, wobei die wenigstens eine NCO-Gruppe enthaltende Verbindung und/oder die wenigstens ein Zerewitinoff-aktives H-Atom enthaltende Verbindung wenigstens eine Alkoxysilangruppe enthalten, unter Erhalt eines Alkoxysilangruppen enthaltenden Polyurethans. Die Erfindung betrifft weiterhin ein Alkoxysilangruppen enthaltendes Polymer, ein Verfahren zur Herstellung eines härtbaren Polymers, ein härtbares Polymer, ein gehärtetes Polymer und deren Verwendung. Die Polymere enthalten einen Komplex eines Lanthanoids mit wenigstens einem beta-Diketonatliganden, vorzugsweise Yb(acac)₃, und sind frei von organischen Zinnverbindungen.

## Beschreibung

Die vorliegende Erfindung betrifft ein Verfahren zur Herstellung von Alkoxysilangruppen enthaltenden Polyurethanen, umfassend den Schritt der Reaktion von einer wenigstens eine NCO-Gruppe enthaltenden Verbindung mit einer wenigstens ein Zerewitinoff-aktives H-Atom enthaltenden Verbindung in Gegenwart einer Katalysatorkomponente, wobei die wenigstens eine NCO-Gruppe enthaltende Verbindung und/oder die wenigstens ein Zerewitinoff-aktives H-Atom enthaltende Verbindung wenigstens eine Alkoxysilangruppe enthalten, unter Erhalt eines Alkoxysilangruppen enthaltenden Polyurethans. Die Erfindung betrifft weiterhin ein Alkoxysilangruppen enthaltendes Polymer, ein Verfahren zur Herstellung eines härtbaren Polymers, ein härtbares Polymer, ein gehärtetes Polymer und deren Verwendung.

Feuchtigkeitshärtende Zusammensetzungen auf Basis von silanfunktionellen Polymeren sind bekannt und werden zum Beispiel im Baugewerbe in großen Mengen als elastische Dichtstoffe oder elastische Parkettklebstoffe eingesetzt.

Silanfunktionelle Polymere können in drei unterschiedliche Klassen eingeteilt werden, die sich in ihrer Reaktivität der Silangruppen unterscheiden, was sich auf die Aushärtungsgeschwindigkeit der aus ihnen hergestellten feuchtigkeitshärtende Zusammensetzungen niederschlägt.

Polymere, die durch Hydrosilylierung von Polymeren mit endständigen Doppelbindungen, beispielsweise Poly(meth)acrylatpolymere oder Polyetherpolymere hergestellt werden sind bekannt. Sie werden beispielsweise in US 3,971,751 und US 6,207,766 beschrieben. Nachteilig ist, dass sie über eine geringe Reaktivität verfügen, so dass zur Herstellung der feuchtigkeitshärtenden Zusammensetzungen mit praxistauglichen Aushärtezeiten in vielen Fällen die Zugabe von zinnhaltigen Härtungskatalysatoren zur Herstellung notwendig wird, welche toxikologisch bedenklich sind und immer weniger vom Markt akzeptiert werden.

Polymere, bei denen sogenannte gamma-Silangruppen über Urethan- oder Harnstoffgruppen an das Polymerrückgrat gebunden sind, sind deutlich reaktiver, so dass eine Herstellung feuchtigkeitshärtender Zusammensetzungen mit praxistauglichen Aushärtezeiten in vielen Fällen ohne oder nur mit geringen Mengen zinnhaltiger Katalysatoren möglich ist.

Als dritte Klasse unterscheiden sich davon Polymere, bei denen sogenannte alpha-Silangruppen über Urethan- oder Harnstoffgruppen an das Polymerrückgrat gebunden sind, und die in einigen Fällen auch ohne spezielle Härtungskatalysatoren rasch aushärten. Deren Nachteil ist, dass sie aufgrund der hohen Reaktivität instabil sind und teuer und schlecht verfügbar sind.

Die Herstellung marktüblicher silanterminierter Polyurethan-Prepolymere beinhaltet die Katalyse der Reaktion von NCO-Gruppen mit Zerewitinoff-aktiven H-Atomen. Hierzu wird in der Regel Dibutylzinndilaurat (DBTL) verwendet. Aufgrund der toxikologischen Eigenschaften von DBTL besteht jedoch der Bedarf an alternativen Katalysatoren.

Darüber hinaus wird DBTL auch zur Herstellung von härtbaren Zusammensetzungen auf Basis silanfunktioneller Polymere verwendet. Aufgrund der toxikologischen Eigenschaften von DBTL besteht auch in diesem Fall der Bedarf an alternativen Katalysatoren.

WO 2013/165552 A1 beschreibt die Verwendung bestimmter Polyacrylaten des Ytterbiums als möglicher Aushärtungskatalysator für feuchtigkeitshärtende Zusammensetzungen enthaltend reaktive Silangruppen, jedoch ohne konkretes Beispiel.

US 7060778 B2 beschreibt Yb(acac)₃ als Katalysator zur Umesterung von aliphatischen Oligocarbonatpolyolen. DE 102004012876 A1 beschreibt Yb(acac)₃ als Katalysator für die NCO/OH-Reaktion.

Ein weiterer Nachteil vieler Metallkatalysatoren, insbesondere von organischen Zinnkatalysatoren, besteht darin, dass sie in härtbaren Zusammensetzungen auf Basis von silanfunktionellen Polymere, beispielsweise verwendet als Baudichtstoffe zu einem stark erhöhten Sekantenmodul nach Aushärtung führen, so dass die Anforderung der ISO 11600 für niedermodulige Dichtstoffe (Sekantenmodul bei 23 Grad Celsius von max. 0,4 MPa gemäß ISO 8339) nicht erfüllt werden kann oder zur Erfüllung der Norm große Mengen Weichmacher notwendig sind, wodurch sich aber die Gefahr einer Fugenrandverschmutzung durch Wanderung des Weichmachers in die Randzonen der verfugten Substrate erhöht (Praxishandbuch Dichtstoffe, IVK, 4. Auflage, S. 139f).

EP 2 952 533 A1 offenbart einen feuchtigkeitshärtenden Dichtstoff umfassend a) mindestens ein silanfunktionelles Polymer und b) mindestens einen Katalysator für die Vernetzung des silanfunktionellen Polymers, wobei der Dichtstoff frei von Organozinn-Verbindungen ist und im ausgehärteten Zustand einen Sekantenmodul bei 100% Dehnung und 23 °C, bestimmt nach ISO 8339, von weniger als 0,4 MPa und ein Rückstellvermögen bei 100% Dehnung, bestimmt nach ISO 7389, von grösser als 70% aufweist. Der Dichtstoff eignet sich gemäß diesem Dokument insbesondere als Baudichtstoff der Klasse 25LM gemäß DIN EN ISO 11600, insbesondere als Fassaden-Dichtstoff.

Aufgabe der vorliegenden Erfindung ist es daher, feuchtigkeitsreaktive Zusammensetzungen auf Basis silanfunktioneller Polymere zur Verfügung zu stellen, welche die Nachteile des Stand der Technik überwinden und im Wesentlichen ohne Zugabe von organischen Zinnverbindungen vollständig aushärten sowie einen geringen Sekantenmodul im ausgehärteten Zustand besitzen.

Erfindungsgemäß gelöst wird diese Aufgabe durch ein Verfahren gemäß Anspruch 1, ein Alkoxysilangruppen enthaltendes Polyurethan gemäß Anspruch 8, ein Verfahren zur Herstellung eines härtbaren Polymers gemäß Anspruch 10, ein härtbares Polymer, gemäß Anspruch 12, ein gehärtetes Polymer gemäß Anspruch 13 und eine Verwendung gemäß Anspruch 15. Vorteilhafte Weiterbildungen sind in den Unteransprüchen und der Beschreibung angegeben. Sie können beliebig kombiniert werden, sofern sich aus dem Kontext nicht eindeutig das Gegenteil ergibt.

Ein Verfahren zur Herstellung von Alkoxysilangruppen enthaltenden Polyurethanen, umfasst den Schritt der Reaktion von einer wenigstens eine NCO-Gruppe enthaltenden Verbindung mit einer wenigstens ein Zerewitinoff-aktives H-Atom enthaltenden Verbindung in Gegenwart einer Katalysatorkomponente, wobei die wenigstens eine NCO-Gruppe enthaltende Verbindung und/oder die wenigstens ein Zerewitinoff-aktives H-Atom enthaltende Verbindung wenigstens eine Alkoxysilangruppe enthalten, unter Erhalt eines Alkoxysilangruppen enthaltenden Polyurethans. Die Katalysatorkomponente enthält einen Komplex eines Lanthanoids mit wenigstens einem beta-Diketonatliganden und die Katalysatorkomponente ist frei von organischen Zinnverbindungen.

Es wurde gefunden, dass der beta-Diketonatkomplex des Lanthanoids als Urethanisierungskatalysator eingesetzt werden kann und im Alkoxysilangruppen enthaltenden Polyurethan verbleiben kann, um bei einer späteren Silanvernetzung ebenfalls als Katalysator zu wirken oder zumindest nicht negativ in Erscheinung zu treten.

Mit diesem erfindungsgemäßen Verfahren lassen sich somit Vorprodukte für Beschichtungsmittel, Klebstoffe, Elastomere und Dichtmassen herstellen, ohne die toxikologischen Nachteile von DBTL-basierten Urethanisierungskatalysatoren in Kauf nehmen zu müssen.

Allgemein bedeutet der Begriff "härtbar" insbesondere, dass die Zusammensetzung unter dem Einfluss äußerer Bedingungen, insbesondere unter dem Einfluss in der Umgebung vorhandener und/oder bewusst zugeführter Feuchtigkeit aus einem relativ weichen, gegebenenfalls plastisch verformbaren Zustand in einen härteren Zustand übergehen kann. Allgemein kann die Vernetzung durch chemische und/oder physikalische Einflüsse erfolgen, neben der bereits erwähnten Feuchtigkeit also beispielsweise auch durch Zuführung von Energie in Form von Wärme, Licht oder sonstiger elektromagnetischer Strahlung, aber auch durch einfaches Inkontaktbringen der Zusammensetzung mit Luft oder einer reaktiven Komponente.

Mit eingeschlossen in den Begriff der Alkoxysilane sind erfindungsgemäß auch Acyloxysilane.

In einer Ausführungsform des Verfahrens wird die zum Polyurethan führende Reaktion zumindest zeitweise bei einer Temperatur von ≥ 50 °C (vorzugsweise ≥ 60 °C) für eine Zeitdauer von ≥ 10 Minuten (vorzugsweise für ≥ 100 Minuten bis ≤ 500 Minuten) durchgeführt.

Dass die Katalysatorkomponente frei von organischen Zinnverbindungen ist, wird im Rahmen der vorliegenden Erfindung derart definiert, dass der Gehalt an organischen Zinnverbindungen in der zum Polyurethan führenden Reaktionsmischung und somit auch im erhaltenen Polyurethan ≤ 0.06 Gewichts-% und vorzugsweise ≤ 0.01 Gewichts-%, bezogen auf das Gesamtgewicht des Alkoxysilangruppen enthaltenden Polyurethans, beträgt.

Die quantitative Bestimmung des Gehalts an organischen Zinnverbindungen erfolgt durch Extraktion der Probe (optional) mit n-Hexan, Derivatisierung (optional) mit Natriumtetraethylborat und Gaschromatographie, wobei eine Detektion mittels Atomemission bevorzugt ist. Details finden sich beispielsweise in der Dissertation "Bestimmung von Organozinnverbindungen in Sedimenten mittels GC-AED - Entwicklung von Extraktions- und Derivatisierungsmethoden" von Almut Liebich, Technische Universität Berlin 2005 (http://dx.doi.org/10.14279/depositonce-1164).

Insbesondere werden dann keine organozinnbasierten Katalysatoren wie DBTL (Dibutylzinndilaurat) in der Reaktion eingesetzt. Generell lassen sich als organische Zinnverbindungen alle Verbindungen definieren, in denen eine kovalente Sn-C-Bindung vorliegt.

Ebenso ist mit eingeschlossen, dass aus etwaigen Vorstufen wie Polyurethan-Prepolymeren keine organischen Zinn-Katalysatorrückstande in die Reaktionsmischung für das erfindungsgemäße Verfahren eingeschleppt werden.

Der Gehalt des Lanthanoid-beta-Diketonatkomplex, bezogen auf das Gesamtgewicht der in der Reaktion eingesetzten Komponenten, kann beispielsweise ≥ 0,0001 Gewichts-% bis ≤ 1 Gewichts-% betragen. Bevorzugte Gehalte sind ≥ 0,002 Gewichts-% bis ≤ 0,05 Gewichts-%, mehr bevorzugt ≥ 0,005 Gewichts-% bis ≤ 0,1 Gewichts-%.

Geeignete Lanthanoidionen in den beta-Diketonatkomplexen sind insbesondere Ionen der Oxidationsstufe (III) des Cer, Praseodym, Neodym, Promethium, Samarium, Europium, Gadolinium, Terbium, Dysprosium, Holmium, Erbium, Thulium, Ytterbium, Lutetium oder deren Mischungen. In einer Ausführungsform dieses Verfahrens ist das Lanthanoid Ytterbium(III).

In einer weiteren Ausführungsform dieses Verfahrens ist der beta-Diketonatligand erhältlich durch Deprotonierung von Hacac (Acetylaceton), Hacac-F₇ (Perfluoroacetylaceton), Hbfa (Benzoyl-2-furanoylmethan), Hbpp (1,3-Bis(3-pyridyl)-1,3-propandion), Hbtfac (Benzoyltrifluoroaceton), Hbzac (Benzoylaceton), Hdbbm (Di(4-brom)benzoylmethan), Hdcm (d,d-Dicampholylmethan), Hdmbm (4,4'-Dimethoxydibenzoylmethan), Hdmh (2,6-Dimethyl-3,5-heptandion), Hdnm (Dinaphthoylmethan), Hdpm (Dipivaloylmethan), Hdppm (Di(perfluoro-2-propoxypropionyl)methan), Hdtp (1,3-Di(2-thienyl)-1,3-propandion), Hfacam (3-(Trifluoroacetyl)-d-campher), Hfdh (6,6,6-Trifluoro-2,2-dimethyl-3,5-hexandion), Hfhd (1,1,1,2,2,6,6,7,7,7-Decafluoro-3,5-heptandion), Hfod (6,6,7,7,8,8,8-Heptafluoro-2,2-dimethyl-3,5-octandion), Hftac (2-Furyltrifluoroaceton), Hhfac (Hexafluoroacetylaceton), Hhfbc (3-(Heptafluorobutyryl)-d-campher), Hhfth (4,4,5,5,6,6,6-Heptafluoro-1-(2-thienyl)-1,3-hexandion), Hmfa (4-Methylbenzoyl-2-furanoylmethan), Hmhd (6-Methyl-2,4-heptandion), Hntac (2-Naphthoyltrifluoroaceton), Hpop (3-(5-Phenyl-1,3,4-oxadiazol-2-yl)-2,4-pentandion), Hppa (3-Phenyl-2,4-pentandion), Hpta (= Htpm) (Pivaloyltrifluoroaceton), Hptp (1-Phenyl-3-(2-thienyl)-1,3-propandion), H(t-cam) (3-(tert-Butylhydroxymethylen)-d-campher), Htfac (Trifluoroacetylaceton), Htfn (1,1,1,2,2,3,3,7,7,8,8,9,9,9-Tetradecafluoro-4,6-nonandion), Hthd (= Hdpm, Htmhd) (2,2,6,6-Tetramethyl-3,5-heptandion), Htnb (4,4,4,-Trifluoro-1-(2-naphtyl)-1,3-butandion), Htmod (2,2,6,6-Tetramethyl-3,5-octandion), Htrimh (2,2,6-Trimethyl-3,5-heptandion), Htod (2,2,7-Trimethyl-3,5-octandion), Htta (2-Thenoyltrifluoroaceton) oder einer beliebigen Mischung hiervon. Hierbei ist Hacac bevorzugt.

In einer weiteren Ausführungsform dieses Verfahrens ist der Komplex eines Lanthanoids mit wenigstens einem beta-Diketonatliganden Yb(acac)₃.

In einer weiteren Ausführungsform dieses Verfahrens enthält die wenigstens eine NCO-Gruppe enthaltende Verbindung wenigstens eine Alkoxysilangruppe und die wenigstens ein Zerewitinoff-aktives H-Atom enthaltende Verbindung enthält keine Alkoxysilangruppe. Geeignete Beispiele für derartige Isocyanatoalkoxysilane sind Isocyanatomethyltrimethoxysilan, Isocyanatomethyltriethoxysilan, Isocyanatomethyltriisopropoxysilan, 2-Isocyanatoethyl-trimethoxysilan, 2-Isocyanatoethyltriethoxysilan, 2-Isocyanatoethyltriisopropoxysilan, 3-Isocyanatopropyltrimethoxysilan, 3-Isocyanatopropyltriethoxysilan, 3-Isocyanatopropylmethyl-dimethoxysilan, 3-Isocyanatopropylmethyldiethoxysilan, 3-Isocyanatopropylethyldiethoxysilan, 3-Isocyanatopropyldimethylethoxysilan, 3-Isocyanatopropyldiisopropylethoxysilan, 3-Isocyanatopropyltripropoxysilan, 3-Isocyanatopropyltriisopropoxysilan, 3-Isocyanatopropyl-tributoxysilan, 3-Iso-cyanatopropylmethyldibutoxysilan, 3-Iso¬cyanatopropylphenyldimethoxysilan, 3-Isocyanato-propylphenyldiethoxysilan, 3-Isocyanatopropyl¬itris(methoxyethoxyethoxy)silan, 2-Isocyanatoisopropyltrimethoxysilan, 4-Isocyanatobutyltrimethoxysilan, 4-Isocyanatobutyl-triethoxysilan, 4-Isocyanatobutyltriisopropoxysilane, 4-Isocyanatobutyl-methyldimethoxysilan, 4-Isocyanatobutylmethyldiethoxysilan, 4-Isocyanatobutylethyldimethoxysilan, 4-Isocyanatobutyl-ethyl¬diethoxysilan, 4-Isocyanatobutyldimethylmethoxysilan, 4-Isocyanato-ibutylphenyldimethoxy-silan, 4-Isocyanatobutylphenyldiethoxysilan, 4-Isocyanato(3-methyl-butyl)trimethoxysilan, 4-Iso-cyanato(3-methylbutyl)triethoxysilan, 4-Isocyanato(3-methyl-butyl)methyldimethoxysilan, 4-Isocyanato(3-methylbutyl)-methyldiethoxysilan und 11-Isocyanatoundecyltrimethoxysilan oder beliebige Gemische solcher Isocyanatoalkoxysilane.

Als Zerewitinoff-aktive Verbindung kommen beispielsweise Polyetherpolyole (insbesondere Polypropylenglykole), Polyesterpolyole und OH-terminierte Polyurethan-Prepolymere in Betracht.

Das erhaltene Reaktionsprodukt kann insbesondere die Struktur (I) aufweisen: 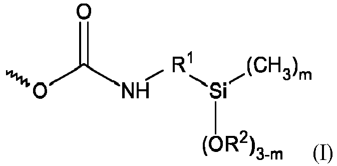 wobei
R¹ für einen Alkylen-Rest mit 1 bis 6 C-Atomen steht,
R² für einen Methyl-Rest oder einen Ethyl-Rest steht und
m für 0 oder 1 oder 2 steht.

Bevorzugt steht m für 0.

Bevorzugt steht R¹ für eine 1,3-Propylengruppe und/oder eine Methylengrupe (-CH₂-).

In einer weiteren Ausführungsform dieses Verfahrens enthält die wenigstens eine NCO-Gruppe enthaltende Verbindung keine Alkoxysilangruppe und die wenigstens ein Zerewitinoff-aktives H-Atom enthaltende Verbindung enthält wenigstens Alkoxysilangruppe.

Geeignete monomere Diisocyanate sind insbesondere 1,4-Diisocyanatobutan (BDI), 1,5-Diisocyanatopentan (PDI), 1,6-Hexamethylendiisocyanat (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclo-hexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xylylendiisocyanat; XDI), 1,3- und 1,4-Bis(1-isocyanato-1-methylethyl)-benzol (TMXDI), Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin und Mischungen davon. Auch aus Diisocyanaten hergestellte Polyisocyanate, wie beispielsweise solche mit Biuret-, Urethan- oder Isocyanuratstruktur sind möglich.

In einer bevorzugten Ausführungsform ist das Diisocyanat aus 1-Isocyanato-3,3,5-trimethyl-5-isocyanatomethyl-cyclohexan (IPDI), 1,6-Hexamethylendiisocyanat (HDI), 2,4- und/oder 2,6-Toluylendiisocyanat (TDI), oder Mischungen davon ausgewählt.

Beispielsweise kann aus der Umsetzung von Isocyanatgruppen-haltigen Polyethern, insbesondere NCO-terminierten Urethan-Polyethern aus der Umsetzung von Polyetherpolyolen mit einer überstöchiometischen Menge an Polyisocyanaten, mit Aminosilanen, Hydroxysilanen oder Mercaptosilanen ein entsprechendes Reaktionsprodukt erhalten werden. Ein solches silanfunktionelles Polymer weist insbesondere Strukturen der Formel (II) auf, 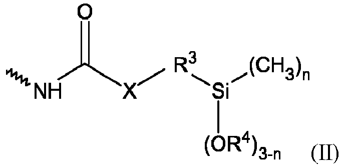 wobei
X für O oder S oder NR⁵ steht, wobei R⁵ für ein Wasserstoffatom oder für einen Kohlenwasserstoff-Rest mit 1 bis 20 C-Atomen, welcher gegebenenfalls cyclische Anteile aufweist und gegebenenfalls eine Alkoxysilyl- oder eine oder mehrere Ether- oder Carbonsäureestergruppen aufweist, steht,
R³ für einen zweiwertigen Kohlenwasserstoff-Rest mit 1 bis 18 C-Atomen, welcher gegebenenfalls cyclische und/oder aromatische Anteile und gegebenenfalls ein oder mehrere Heteroatome aufweist, steht,
R⁴ für einen Alkyl-Rest mit 1 bis 5 C-Atomen, welcher gegebenenfalls eine Ethergruppe enthält, steht und
n für 0 oder 1 oder 2 steht.

Bevorzugt steht n für 0.

Bevorzugt stehen R³ für 1,3-Propylen oder 1 ,4-Butylen oder 3,3-Dimethyl-1 ,4-butylen und X für NR⁵, wobei R⁵ bevorzugt für einen Rest der Formel 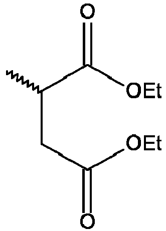 steht.

Weiterhin bevorzugt stehen X für O und R für einen Rest der Formel 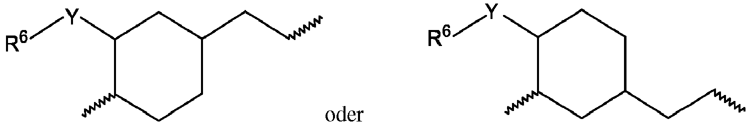 wobei dieser Rest so steht, dass X direkt an den Cyclohexylring gebunden ist, und wobei Y für O oder für NR⁷ steht, und R⁶ und R⁷ unabhängig voneinander jeweils für einen einwertigen Kohlenwasserstoffrest mit 1 bis 18 C-Atomen, welcher Heteroatome in Form von Ether-Sauerstoff oder Thioether-Schwefel oder tertiärem Amin-Stickstoff enthalten kann, stehen, oder zusammen mit Y (bzw. N) einen Ring bilden, insbesondere einen Morpholin-Ring.

In einer weiteren Ausführungsform dieses Verfahrens enthält die wenigstens ein Zerewitinoff-aktives H-Atom enthaltende Verbindung wenigstens eine primäre oder sekundäre Aminogruppe. Vorzugsweise handelt es sich dabei um N-(2-Aminoethyl)-3-aminopropyltrimethoxysilan, N-Cyclohexyl-3-aminopropyltrimethoxysilan, N-Cyclohexylaminomethyltriethoxysilan, 3-Aminopropyltriethoxysilan, 3-(2-Aminomethylamino)propyltriethoxysilan, N-(2-Aminoethyl)-3-aminopro-pylmethyldimethoxysilan, 3-Aminopropyltrimethoxysilan, 3-Ureidopropyl-trimethoxysilan, N-(3-Trimethoxysilylpropyl)asparaginsäure-diethylester oder deren Mischungen. Geeigne sind weiterhin entsprechende Verbindungen, die anstelle von Methoxygruppen Ethoxygruppen enthalten oder umgekehrt oder aber Acyloxy-Gruppen enthalten.

Die Erfindung betrifft weiterhin ein Alkoxysilangruppen enthaltendes Polymer, wobei das Polymer einen Komplex eines Lanthanoids mit wenigstens einem beta-Diketonatliganden enthält und das Polymer frei von organischen Zinnverbindungen ist. Hinsichtlich des Lanthanoids, der beta-Diketonatliganden und der Abwesenheit von organischen Zinnverbindungen gelten die gleichen Gesichtspunkte wie zuvor zum erfindungsgemäßen Verfahren unter Reaktion von NCO-Gruppen mit Zerewitinoff-aktiven H-Atomen. Sie werden zur Vermeidung unnötiger Längen nicht wiederholt. Es sei nur angemerkt, dass ein bevorzugter Lanthanoidkomplex ebenfalls Yb(acac)₃ ist.

Das Alkoxysilangruppen enthaltende Polymer, auch als silanfunktionelles Polymer bezeichnet, ist bevorzugt ein Polyolefin, ein Polyester, ein Polyamid, ein Poly(meth)acrylat oder ein Polyether oder eine Mischform dieser Polymere. Seine Silangruppen können seitlich in der Kette oder endständig vorhanden sein. Besonders bevorzugt ist das silanfunktionelle Polymer ein Polyolefin oder ein Polyester oder ein Poly(meth)acrylat oder ein Polyether oder eine Mischform dieser Polymere.

Beispielsweise kann das silanfunktionelle Polymer ein silangruppenhaltiger Polyether sein. Er weist bevorzugt mehrheitlich Oxyalkylen-Einheiten, insbesondere 1,2-Oxypropylen-Einheiten, auf. Die Silangruppen sind bevorzugt Dialkoxysilangruppen und/oder Trialkoxysilangruppen, insbesondere Dimethoxymethylsilangruppen oder Trimethoxysilangruppen oder Triethoxysilangruppen.

Das silanfunktionelle Polymer ist bevorzugt frei von Isocyanatgruppen.

Das silanfunktionelle Polymer weist im Mittel bevorzugt 1,3 bis 4, insbesondere 1,5 bis 3, besonders bevorzugt 1,7 bis 2,8, Silangruppen pro Molekül auf.

Das silanfunktionelle Polymer weist bevorzugt ein mittleres Molekulargewicht im Bereich von 1000 bis 30000 g/mol, insbesondere von 2000 bis 20000 g/mol, auf.

Das silanfunktionelle Polymer ist bevorzugt bei Raumtemperatur flüssig. Besonders bevorzugt weist es eine tiefe Viskosität auf. Insbesondere liegt die Viskosität bei 20 °C im Bereich von 1 bis 200 Pa s, bevorzugt 2 bis 100 Pa s, besonders bevorzugt 5 bis 50 Pa s.

Bevorzugt ist das silanfunktionelle Polymer ausgewählt aus der Gruppe bestehend aus
- Silangruppen-haltigen Polyethern erhalten aus der Umsetzung von Allylgruppen-haltigen Polyethern mit Hydrosilanen, gegebenenfalls unter Kettenverlängerung, insbesondere mit Diisocyanaten;
- Silangruppen-haltigen Polyethern erhalten aus der Copolymerisation von Alkylenoxiden und Epoxysilanen, gegebenenfalls unter Kettenverlängerung, insbesondere mit Diisocyanaten;
- Silangruppen-haltigen Polyethern erhalten aus der Umsetzung von Polyetherpolyolen mit Isocyanatosilanen, gegebenenfalls unter Kettenverlängerung mit Diisocyanaten; und
- Silangruppen-haltigen Polyethern erhalten aus der Umsetzung von Isocyanatgruppen-haltigen Urethan-Polyethern mit Aminosilanen oder Hydroxysilanen oder Mercaptosilanen.

Diese silanfunktionellen Polymere sind besonders gut zugänglich.

Davon bevorzugt sind die Silangruppen-haltigen Polyether erhalten aus der Umsetzung von Allylgruppen-haltigen Polyethern mit Hydrosilanen. Diese silanfunktionellen Polymere sind besonders niedrigviskos und besonders reaktionsträge.

Davon weiterhin bevorzugt sind die Silangruppen-haltigen Polyether erhalten aus der Umsetzung von Polyetherpolyolen mit Isocyanatosilanen. Diese silanfunktionellen Polymere sind besonders gut zugänglich, sehr niedrigviskos und eher reaktionsträge.

Weiterhin geeignet sind kommerziell erhältliche silanfunktionelle Polymere, insbesondere Produkte unter den Handelsnamen MS Polymer™ (von Kaneka Corp.; insbesondere die Typen S203H, S303H, S227, S810, MA903 oder S943); MS Polymer™ bzw. Silyl™ (von Kaneka Corp.; insbesondere die Typen SAT010, SAT030, SAT200, SAX350, SAX400, SAX725, MAX450, MAX602 oder MAX951); Excestar® (von Asahi Glass Co. Ltd.; insbesondere die Typen S2410, S2420, S3430 oder S3630); SPUR+® (von Momentive Performance Materials; insbesondere die Typen 101 OLM, 1015LM oder 1050MM); Vorasil™ (von Dow Chemical Co.; insbesondere die Typen 602 oder 604); Desmoseal® (von Bayer MaterialScience AG; insbesondere die Typen S XP 2458, XP 2636, S XP 2749, S XP 2774 oder S XP 2821); TEGOPAC® (von Evonik Industries AG; insbesondere die Typen Seal 100, Bond 150 oder Bond 250); oder Geniosil® STP (von Wacker Chemie AG; insbesondere die Typen E15 oder E35, E10 und E-30).

Ein silanfunktionelles Polymer erhalten aus der Umsetzung von Allylgruppen-haltigen Polyethern mit Hydrosilanen, gegebenenfalls unter Kettenverlängerung mit beispielsweise Diisocyanaten weist insbesondere Strukturen der Formel (III) auf, 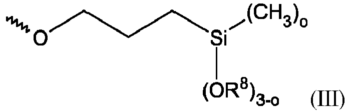 wobei
R⁸ für einen Methyl-Rest oder einen Ethyl-Rest steht und
o für 0 oder 1 oder 2 steht.

Bevorzugt steht o für 0 oder 1 , insbesondere für 1, und R⁸ für einen Methyl-Rest.

Ein silanfunktionelles Polymer erhalten aus der Copolymerisation von Alkylenoxiden und Epoxysilanen, gegebenenfalls unter Kettenverlängerung mit beispielsweise Diisocyanaten weist insbesondere Strukturen der Formel (IV) auf, 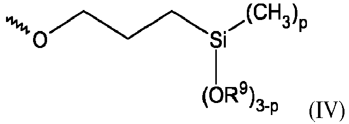 wobei
R⁹ für einen Methyl-Rest oder einen Ethyl-Rest steht und
p für 0 oder 1 oder 2 steht.

Bevorzugt steht für 0.

In einer Ausführungsform dieses Polymers ist das Polymer ein Polyurethan, welches durch ein vorstehend beschriebenes Verfahren erhältlich ist.

In einer Ausführungsform beträgt die Viskosität des Polyurethans (Platte-Kegel Rotationsviskosimeter, 23 °C, ISO 3219:1994) ≤ 115% der Viskosität eines nach dem gleichen Herstellungsverfahren, jedoch mit Dibutylzinndilaurat anstelle des Komplexes des Lanthanoids mit wenigstens einem beta-Diketonatliganden in der Katalysatorkomponente, hergestellten Vergleichs-Polyurethans.

Ein weiterer Aspekt der Erfindung ist ein Verfahren zur Herstellung eines härtbaren Polymers, wobei das Verfahren den Schritt des Kontaktierens eines Polymers wie zuvor beschrieben mit einem Siloxan-Kondensationskatalysator umfasst. Als Siloxan-Kondensationskatalysatoren eignen sich alle beliebigen nicht-Organo-Zinnkatalysatoren.

Besonders bevorzugt als Katalysator für die Vernetzung von silanfunktionellen Polymeren sind solche, welche mindestens eine Amidinogruppe aufweist. Insbesondere handelt es sich dabei um eine Verbindung der Formel (V):

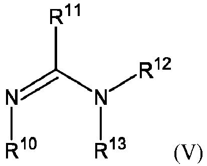

Dabei steht der Rest R¹⁰ für ein Wasserstoffatom, für einen einwertigen Kohlenwasserstoffrest mit 1 bis 10 C-Atomen oder zusammen mit R¹³ für einen gegebenenfalls substituierten, zweiwertigen Kohlenwasserstoffrest mit 1 bis 10 C-Atomen.

Der Rest R¹¹ steht für ein Wasserstoffatom, für einen einwertigen Kohlenwasserstoffrest mit 1 bis 12 C-Atomen, gegebenenfalls mit cyclischen oder aromatischen Anteilen, und gegebenenfalls mit einem oder mehreren Heteroatomen, für eine Aminogruppe oder zusammen mit R¹² für einen gegebenenfalls substituierten, zweiwertigen Kohlenwasserstoffrest mit 1 bis 10 C-Atomen.

Der Rest R¹² steht für ein Wasserstoffatom, für einen einwertigen Kohlenwasserstoffrest mit 1 bis 12 C-Atomen, gegebenenfalls mit cyclischen oder aromatischen Anteilen, und gegebenenfalls mit einem oder mehreren Heteroatomen oder zusammen mit R¹¹ für einen gegebenenfalls substituierten, zweiwertigen Kohlenwasserstoffrest mit 1 bis 10 C-Atomen.

Der Rest R¹³ steht für ein Wasserstoffatom, für einen einwertigen Kohlenwasserstoffrest mit 1 bis 10 C-Atomen oder zusammen mit R¹⁰ für einen gegebenenfalls substituierten, zweiwertigen Kohlenwasserstoffrest mit 1 bis 10 C-Atomen.

Beispielsweise handelt es sich beim Rest R¹¹ und/oder R¹², welcher Heteroatome aufweist, um einen Alkylrest, der eine Silangruppe aufweist, wie etwa einem Alkyltrialkoxysilanrest.

Vorzugsweise ist die Verbindung, welche mindestens eine Amidino-Gruppe aufweist, ein Guanidin, ein Imidazol, ein Imidazolin, ein bicyclisches Amidin oder ein Derivat dieser Verbindungen. Beispielsweise sind solche Derivate substituierte Imidazole oder Imidazoline, insbesondere eine Silangruppe aufweisende Imidazole oder Imidazoline.

Bevorzugte Verbindungen, welche mindestens eine Amidinogruppe aufweisen sind 1,8-Diaza-bicyclo[5.4.0]undec-7-en (DBU), 1,5-Diazabicyclo[4.3.0]non-5-en (DBN), 6-(Dibutylamino)-1,8-diazabicyclo[5.4.0]undec-7-en, N-Methyltriazabicyclodecen, Tetramethylguanidin, 2-Guanidinobenzimidazol, Acetylacetoneguanidin, 1,3-Di-o-tolylguanidin (DTG), 1 ,3-Diphenylguanidin, o-Tolylbiguanidin, 2-tert-Butyl-1,1,3,3-tetramethylguanidine oder N-(3-Triethoxysilylpropyl)-4,5-dihydroimidazol, N-(3-Trimethoxysilylpropyl)-4,5-dihydroimidazol.

Der Anteil des Siloxan-Kondensationskatalysators beträgt vorzugsweise 0.01 bis 3 Gew.-%, insbesondere 0.03 bis 2 Gew.-%, bevorzugt 0.05 bis 0,5 Gew.-%, der gesamten Zusammensetzung. Bei Anteilen von mehr als 0.5 Gew.-% kann es zum Ausschwitzen der Verbindung aus der ausgehärteten Zusammensetzung kommen, was für bestimmte Anwendungen nachteilig ist (optische Erscheinung, leichte Verschmutzbarkeit, etc.).

Bevorzugt handelt es sich beim Amidin um ein bicyclisches Amidin, insbesondere mit 9, 10, 11 , oder 12 Kohlenstoffatomen im bicyclischen Bestandteil. Der Vorteil dieser Verbindungen ist, dass sie eine höhere Reaktivität aufweisen und ihr Gehalt daher vergleichsweise gering gehalten werden kann. Dadurch kann wiederum das Ausschwitzen dieser Verbindungen aus der ausgehärteten Zusammensetzung reduziert werden.

Ebenfalls als Siloxan-Kondensationskatalysator geeignet sind aminogruppenhaltige Katalysatoren wie DABCO (1,4-Diazabicyclo[2.2.2]octan).

Ebenfalls als Siloxan-Kondensationskatalysator geeignet sind monomere aminogruppenhaltige Silane, wie sie auch als Haftsilane eingesetzt werden.

In einer Ausführungsform dieses Verfahrens wird das Polymer weiterhin mit Wasser kontaktiert.

Die Erfindung betrifft weiterhin ein härtbares Polymer, welches durch ein zuvor beschriebenes erfindungsgemäßes Verfahren erhältlich ist. Das härtbare Polymer ist vorzugsweise Bestandteil einer härtbaren Formulierung zusammen mit Hilfs- und Zusatzmitteln. Es wird beispielsweise in einer Menge von 10 bis 80 Gew.-%, insbesondere in einer Menge von 15 bis 50 Gew.-%, bevorzugt 20 bis 40 Gew.-%, bezogen auf die gesamte Zusammensetzung, eingesetzt. Solch eine Formulierung kann die folgenden Komponenten enthalten, wobei Yb(acac)₃ aus der Reaktion zur Herstellung des härtbaren Polymers stammen kann:
a) zwischen 10 Gew-% und 50% Gew-% Alkoxysilangruppen enthaltendes Polymer;
b) Ytterbium(III)acetylacetonat zwischen 0,0001 Gew.-% und 0,1 Gew.-%;
c) zwischen 0,001 Gew-% und 3% Gew-% mindestens eines Katalysators für die Vernetzung von silanfunktionellen Polymeren, ausgewählt aus Verbindungen, die weder Zinn, Zinnionen, noch Organozinn-Verbindungen enthalten;
d) Hilfs- und Zusatzmittel.

Geeignet sind insbesondere die folgenden Hilfs- und Zusatzmittel:
- Anorganische und organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Glimmer, Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln aus anorganischen oder organischen Materialien.
- Haftvermittler und/oder Vernetzer, insbesondere Silane wie insbesondere Aminosilane, wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'- [3-(trimethoxysilyl)propyl]ethylendiamin oder deren Analoga mit Ethoxy- oder Isopropoxy- anstelle der Methoxygruppen am Silicium, N-Phenyl-, N-Cyclohexyl- oder N-Alkylaminosilane, weiterhin Mercaptosilane, Epoxysilane, (Meth)acrylo-silane, Anhydridosilane, Carbamatosilane, Alkylsilane, Vinylsilane oder Iminosilane, oder oligomere Formen dieser Silane, oder Addukte aus primären Aminosilanen mit Epoxysilanen oder (Meth)acrylosilanen oder Anhydridosilanen. Insbesondere geeignet sind 3-Glycidoxypropyltrimethoxysilan, 3- Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Ureidopropyltrinnethoxysilan, Vinyltrimethoxysilan oder die entsprechenden Silane mit Ethoxygruppen anstelle der Methoxygruppen, oder oligomere Formen dieser Silane.

- Weichmacher, insbesondere Carbonsäureester wie Phthalate, insbesondere Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, organische Phosphor- oder Sulfonsäureester, Polybutene oder von natürlichen Fetten oder Ölen abgeleitete Fettsäuremethyl- oder -ethylester, auch "Biodiesel" genannt, 1,2-Cyclohexandicarbonsäuredialkylester wie 1,2-Cyclohexan-dicarbon-säurediisononylester.
- gegebenfalls Lösemittel.
- Trocknungsmittel, insbesondere Tetraethoxysilan, Vinyltrimethoxy- oder Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxy-methyl)silane, Methoxymethylsilane, Orthoameisensäureester, oder Calciumoxid oder Molekularsiebe.
- Stabilisatoren gegen Oxidation, Wärme, Licht oder UV-Strahlung.
- Pigmente, insbesondere Titandioxid oder Eisenoxide.
- Rheologie-Modifizierer, insbesondere Verdickungsmittel, insbesondere
- Schichtsilikate wie Bentonite, Derivate von Rizinusöl, hydriertes Rizinusöl, Polyamide, Polyurethane, Harnstoffverbindungen, pyrogene Kieselsäuren, Celluloseether oder hydrophob modifizierte Polyoxyethylene.
- Fasern, insbesondere Glasfasern, Kohlefasern, Metallfasern, Keramikfasern oder Kunststofffasern wie Polyamidfasern oder Polyethylenfasern.
- Farbstoffe.
- natürliche Harze, Fette oder Öle wie Kolophonium, Schellack, Leinöl, Rizinusöl oder Sojaöl.
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene,
- Ethylenvinylacetat-Copolymere (EVA) oder ataktische Poly-α-Olefine (APAO).
- flammhemmende Substanzen, insbesondere die bereits genannten Füllstoffe Aluminiumhydroxid oder Magnesiumhydroxid, oder insbesondere organische Phosphorsäureester wie insbesondere Triethylphosphat, Trikresylphosphat, Triphenylphosphat, Diphenylkresylphosphat, Isodecyldiphenyl- phosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol- bis(diphenylphosphat), Bisphenol-A-bis(diphenylphosphat) oder Ammoniumpolyphosphate.
- oberflächenaktive Substanzen, insbesondere Netzmittel, Verlaufsmittel, Entlüftungsmittel oder Entschäumer.
- Biozide, insbesondere Algizide, Fungizide oder das Pilzwachstum hemmende Substanzen.
oder weitere üblicherweise in feuchtigkeitshärtenden Zusammensetzungen eingesetzte Substanzen.

Es kann sinnvoll sein, gewisse Bestandteile vor dem Einmischen in die Zusammensetzung chemisch oder physikalisch zu trocknen.

In einer bevorzugten Ausführungsform ist die Zusammensetzung frei von Schwermetall-haltigen organischen Verbindungen. Insbesondere ist sie frei von organischen Zinnverbindungen.

Die Zusammensetzung wird vorzugsweise unter Ausschluss von Feuchtigkeit hergestellt und aufbewahrt. Typischerweise ist die Zusammensetzung in einer geeigneten Verpackung oder Anordnung, wie insbesondere einem Fass, einem Beutel oder einer Kartusche, unter Ausschluss von Feuchtigkeit lagerstabil.

Die Zusammensetzung kann in Form einer einkomponentigen oder in Form einer zweikomponentigen Zusammensetzung vorliegen.

Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist. Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

Bei der Applikation der Zusammensetzung auf mindestens einen Festkörper oder Artikel kommen die vorhandenen Silangruppen und gegebenenfalls vorhandene weitere feuchtigkeitsreaktive Gruppen in Kontakt mit Feuchtigkeit, wodurch die Zusammensetzung aushärtet. Die Aushärtung erfolgt je nach Temperatur, Art des Kontaktes, der Menge der Feuchtigkeit und der Anwesenheit allfälliger Katalysatoren unterschiedlich schnell. Bei einer Aushärtung mittels Luftfeuchtigkeit wird zunächst eine Haut an der Oberfläche der Zusammensetzung gebildet. Die sogenannte Hautbildungszeit stellt ein Maß für die Aushärtungsgeschwindigkeit dar.

Ein weiterer Aspekt der Erfindung ist ein gehärtetes Polymer, welches durch Härtung eines zuvor beschriebenen härtbaren Polymers erhältlich ist.

Das Polymer verfügt im ausgehärteten Zustand über ausgeprägt elastische Eigenschaften, insbesondere eine hohe Festigkeit und eine hohe Dehnbarkeit, sowie über eine gute Wärmebeständigkeit und gute Haftungseigenschaften auf diversen Substraten. Dadurch eignet sie sich für eine Vielzahl von Verwendungen, insbesondere als Faserverbundwerkstoff (Composite), Vergussmasse, Dichtstoff, Klebstoff, Belag, Beschichtung oder Anstrich für Bau- und Industrieanwendungen, beispielsweise als Elektroisolationsmasse, Spachtelmasse, Fugendichtstoff, Schweiß- oder Bördelnahtdichtstoff, Parkettklebstoff, Montageklebstoff, Karrosserieklebstoff, Scheibenklebstoff, Sandwichelementklebstoff, Bodenbelag, Bodenbeschichtung, Balkonbeschichtung, Dachbeschichtung, Betonschutzbeschichtung, Parkhausbeschichtung oder als Schutzanstrich gegen Korrosion, als Versiegelung, Anstrich, Lack oder Primer. Besonders geeignet ist es als Klebstoff oder Dichtstoff oder Beschichtung, insbesondere für die Fugenabdichtung oder für elastische Klebeverbindungen in Bau- oder Industrieanwendungen.

In einer Ausführungsform des gehärteten Polymers weist das gehärtete Polymer gegenüber einem Vergleichs-Polymer wenigstens eine der nachfolgenden Eigenschaften auf, wobei die jeweiligen Proben vor der Messung für 14 Tage bei 23 °C und 50 % relativer Luftfeuchtigkeit gelagert wurden:
Shore A-Härte (DIN 53505): ≤ 90% (bevorzugt ≤ 85%, mehr bevorzugt ≤ 80%) des Vergleichs-Polymers;
Prozentwert der Bruchdehnung (DIN EN 53504, Zuggeschwindigkeit: 200 mm/min, S2 Prüfkörper): ≥ 101% (bevorzugt ≥ 105%, mehr bevorzugt ≥110%) des Prozentwerts des Vergleichs-Polymers;
Sekantenmodul (EN ISO 8339, 100% Dehnung): ≤ 90% (bevorzugt ≤ 85%, mehr bevorzugt ≤ 80%) des Vergleichs-Polymers;
und wobei das Vergleichs-Polymer wie das gehärtete Polymer hergestellt wurde, jedoch mit Dibutylzinndilaurat in gleicher molarer Menge anstelle des Komplexes des Lanthanoids mit wenigstens einem beta-Diketonatliganden in der Katalysatorkomponente im Verfahren wie vorstehend beschrieben wurde.

Die Erfindung betrifft weiterhin die Verwendung eines härtbaren Polymers wie vorstehend beschrieben wurde und/oder des gehärteten Polymers wie vorstehend beschrieben wurde als Dichtstoff, Klebstoff oder Beschichtungsmaterial.

Für die Anwendung als Klebstoff oder Dichtstoff weist das härtbare Polymer bevorzugt eine pastöse Konsistenz mit strukturviskosen Eigenschaften auf. Ein solcher pastöser Klebstoff oder Dichtstoff wird insbesondere aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikationsroboters, auf ein Substrat aufgetragen.

Verklebt oder abgedichtet werden können zwei gleichartige oder zwei verschiedene Substrate.

Geeignete Substrate sind insbesondere:
- Glas, Glaskeramik, Siebdruckkeramik, Beton, Mörtel, Backstein, Ziegel, Gips oder Natursteine wie Granit oder Marmor;
- Metalle oder Legierungen, wie Aluminium, Eisen, Stahl oder Buntmetalle, oder oberflächenveredelte Metalle oder Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaserverstärkte Kunststoffe (CFK), Glasfaserverstärkte Kunststoffe (GFK) oder Sheet Moulding Compounds (SMC);
- beschichtete Substrate, wie pulverbeschichtete Metalle oder Legierungen;
- Farben oder Lacke, insbesondere Automobildecklacke.

Die Substrate können bei Bedarf vor dem Applizieren des Klebstoffs oder Dichtstoffs vorbehandelt werden, insbesondere durch physikalische und/oder chemische Reinigungsverfahren oder das Aufbringen eines Haftvermittlers, einer Haftvermittlerlösung oder eines Primers.

Nach dem Verkleben oder Abdichten von zwei Substraten wird ein verklebter oder abgedichteter Artikel erhalten. Ein derartiger Artikel kann ein Bauwerk sein, insbesondere ein Bauwerk des Hoch- oder Tiefbaus, oder ein industrielles Gut oder ein Konsumgut sein, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, ein Anbauteil davon sein.

Die feuchtigkeitshärtende Zusammensetzung enthält bevorzugt mindestens einen weiteren Bestandteil ausgewählt aus Füllstoffen, Vernetzern, Weichmachern, Lösemitteln, Katalysatoren, Haftvermittlern, Trocknungsmitteln, Stabilisatoren, Pigmenten und Rheologiehilfsmitteln, wie vorgängig beschrieben. Die feuchtigkeitshärtende Zusammensetzung weist bevorzugt einen Gehalt an silanfunktionellen Polymeren im Bereich von 5 bis 95 Gewichts-%, insbesondere im Bereich von 10 bis 50 Gewichts-% auf.

### Beispiele

Die vorliegende Erfindung wird anhand der nachfolgenden Beispiele näher erläutert, ohne jedoch darauf beschränkt zu sein.

### Methoden und Materialien:

Bestimmung von Shore-Härte, Reißdehnung, Zugfestigkeit, Dehnspannung bei 100% Dehnung und Rückstellvermögen:
Die feuchtigkeitshärtenden Zusammensetzungen wurden nach sieben Tagen Lagerung gemessen ab Herstellung in einer Kartusche mit Hilfe eines Rakels zu Membranen mit einer gleichmäßigen Schichtdicke von 2 mm auf eine Polyethylen-Folie aufgebracht und für 14 Tage bei 23 °C und 50% relativer Luftfeuchtigkeit ausgehärtet, wobei die Membranen nach 7 Tagen von der Folie gelöst und gewendet wurden. Anschließend wurden die Eigenschaften der erhaltenen Membranen anhand der folgenden Verfahren bestimmt.

Die Prüfung der Shore-A-Härte erfolgte an den Membranen nach der Vorschrift in DIN ISO 7619-1. Für die Ermittlung der Shore-A-Härte wurden drei Membranen aufeinander gelegt, um eine Schichtdicke von 6 mm zu gewährleisten.

Die Bestimmung der Reißdehnung, der Zugfestigkeit und Dehnspannung bei 100% Dehnung erfolgte durch einen Zugversuch gemäß der Vorschrift in DIN 53 504 an S2-Schulterstäben, die mit einer Formstanze aus den wie oben beschrieben hergestellten Membranen gestanzt wurden. Die Prüfgeschwindigkeit betrug 200 mm/min.

Das Rückstellvermögen wurde gemäß ISO 7389 an Aluminium-Prüfkörpern bestimmt (Lagerung Verfahren B).

Die Bestimmung der Viskosität nach sieben bzw. 60 Tagen Lagerung erfolgte nach der Vorschrift in DIN EN ISO 3219/B3 bei einer Scherrate von 40/s.

Die Hautbildezeit der feuchtigkeitshärtenden Zusammensetzungen wurde 7d nach Herstellung bestimmt. Mittels eines Rakels (200 µm) wird ein Film des Klebstoffs auf eine vorher mit Ethylacetat gereinigte Glasplatte aufgetragen und sofort in einen Drying Recorder (BK 3 Drying Recorder BYK-Gardner) eingelegt. Die Nadel wird mit 10 g belastet und bewegte sich über eine Zeitraum von 24 Stunden über eine Strecke von 35 cm. Der Drying Recorder befand sich in einem Klimaraum bei 23 °C und 50 % rel. Luftfeuchte. Als Hautbildezeit wurde der Zeitpunkt des Verschwindens der permanenten Spur der Nadel aus dem Film angegeben.

Die zur Zeit der Versuchsdurchführung herrschende Umgebungstemperatur von 23 °C wird als RT (Raumtemperatur) bezeichnet.

Die Durchhärtung der feuchtigkeitshärtenden Zusammensetzungen wurde 7d nach Herstellung in einer Teflonform mit keilförmiger Nut bestimmt, die mit dem Schichtdickenmessgerät an ihrer tiefsten Stelle ausgemessen wurde und eine Markierung des Beginns der Vertiefung aufweist. Der Dicht-/Klebstoff wurde blasenfrei und im Überschuss in die Nut gefüllt. Mit einem Kartenblatt oder Japanspachtel wurde der überstehende Dicht- bzw. Klebstoff abgezogen. Die Prüfung wurde im Klimaraum bei Normklima (23 °C/50 % relativer Luftfeuchtigkeit) durchgeführt. Von der Markierung des Beginns der Vertiefung wurde die Dicht-/Klebstoffschicht nach 1 bzw. 3 Tagen soweit vorsichtig soweit abgelöst, bis nicht ausgehärtetes Material in der Form verblieb. Diese Stelle wurde am Rand markiert und der abgezogene Dicht-/ Klebstoff wurde wieder in die Form gelegt und leicht angedrückt. Die Strecke zwischen der Markierung des Beginns der Vertiefung und dieser Markierung wurde mit dem Lineal ausgemessen (entspricht bereits ausgehärtete Länge des Dicht-/Klebstoffes). Die Durchhärtung D ist nach folgender Gleichung zu berechnen: D = (l · d)/L mit l = bereits ausgehärtete Länge des Dicht-/Klebstoffes [mm], L = Länge der Nut [mm] und d = maximale Tiefe der Nut [mm].

Die Klebrigkeit der 2 mm-Membran nach 24 h Aushärtung wurde durch leichten Fingerdruck beurteilt. Dabei wurde geprüft, ob sich der Film noch klebrig anfühlt.

In den Formulierungen der härtbaren Zusammensetzung haben die Zusatz- und Hilfsstoffe die folgenden Bedeutungen:

| **Bezeichnung** | **Beschreibung** | **Hersteller** |
|---|---|---|
| Mesamoll® | Weichmacher | Lanxess |
| Fibadur® Schwarz 400724 | Pigment-Paste | Fink |
| Tronox® 8300 | Pigment | Tronox Inc. |
| Cab-O-Sil® TS 720 | Rheologieadditiv | Cabot Corporation |
| Socal® U1S2 | Füllstoff | Imerys Carbonates |
| Dynasilan® VTMO | Trocknungsmittel | Evonik |
| Lupragen® N700 | Katalysator (DBU) | BASF SE |
| Tinuvin® 292 | Stabilisator | BASF SE |
| Tinuvin® 1130 | Stabilisator | BASF SE |
| Irganox® 1135 | Stabilisator | BASF SE |
| Dynasilan® 1505 | Haftvermittler und/oder Vernetzer | Evonik |
| Dynasilan® 1146 | Haftvermittler und/oder Vernetzer | Evonik |
| Jayflex® DINP | Weichmacher | Exxon Mobile Chemical |
| Dynasilan® 1189 | Haftvermittler | Evonik |

### Herstellung von Alkoxysitangruppen enthaltenden Polyurethanen

### Beispiel 1-1 (erfindungsgemäß):

1174,0 g eines Propylenglykols der OH-Zahl 13 (Acclaim® Polyol 8200 N der Covestro Deutschland AG; Leverkusen DE) wurden mit 147,2 g Mesamoll® (Lanxess AG; Leverkusen, DE) und 63,5 g Isophorondiisocyanat bei 60 °C unter Zugabe von 80 ppm Ytterbium(III)acetylacetonat bis zum Erreichen des theoretischen NCO-Gehalts von 0,84 % prepolymerisiert. Anschließend tropfte man 102,1 g N-(3-Trimethoxysilylpropyl)asparaginsäure-diethylester (hergestellt gemäß EP-A 596 360, Bsp. 5) zügig zu und rührte, bis im IR Spektrum keine Isocyanatbande mehr zu sehen war. Das erhaltene Alkoxysilyl-Endgruppen aufweisende Polyurethanprepolymer hatte eine Viskosität von 21100 mPas

### Beispiel 1-2 (Vergleichsbeispiel):

Die in Beispiel 1 beschriebene Arbeitsweise wurde wiederholt mit der Abänderung, dass anstelle von 80 ppm Ytterbium(III)acetylacetonat 40 ppm Dibutylzinndilaurat eingesetzt wurden. Das erhaltene Alkoxysilyl-Endgruppen aufweisende Polyurethanprepolymer hatte eine Viskosität von 23500 mPas.

### Beispiel 1-3 (erfindungsgemäß):

1200,0 g eines Polypropylenglykols der OH-Zahl 4,9 (hergestellt gemäß Beispiel 7 von EP-A 0654302) wurden sechs Stunden lang im Vakuum bei 80 °C getrocknet. Nach Abkühlen auf 60 °C wurden 24,36 g 3-Isocyanatopropyltrimethoxysilan (Geniosil® GF40, Wacker AG, Burghausen) sowie 100 ppm Ytterbium(III)acetylacetonat zugegeben, und die Reaktion wurde bis zum Erreichen des theoretischen NCO-Gehalts von 0,05 % prepolymerisiert. Anschließend wurden 0,4 g Methanol zugegeben, um die überschüssigen NCO-Gruppen abzufangen. Es wurde gerührt, bis im IR Spektrum keine Isocyanatbande mehr zu sehen war. Das erhaltene Alkoxysilyl-Endgruppen aufweisende Polyurethanprepolymer hatte eine Viskosität von 69400 mPas (23°C).

### Beispiel 1-4 (Vergleichsbeispiel)

Die in Beispiel 3 beschriebene Arbeitsweise wurde wiederholt mit der Abänderung, dass anstelle von 100 ppm Ytterbium(III)acetylacetonat 50 ppm Dibutylzinndilaurat eingesetzt wurden. Das erhaltene Alkoxysilyl-Endgruppen aufweisende Polyurethanprepolymer hatte eine Viskosität von 62200 mPas.

### Beispiel 1-5 (Vergleichsbeispiel)

Die in Beispiel 3 beschriebene Arbeitsweise wird wiederholt mit der Abänderung, dass anstelle von 100 ppm Ytterbium(III)acetylacetonat 100 ppm K-Kat XK-614 (nicht-zinnhaltiger Urethanisierungskatalysator auf Basis von Zink, Firma King Industries) eingesetzt wurde. Das erhaltene Alkoxysilyl-Endgruppen aufweisende Polyurethanprepolymer hatte eine Viskosität von 70300 mPas.

### Formulierung der feuchtigkeitshärtenden Zusammensetzungen

Die feuchtigkeitshärtenden Zusammensetzungen wurde gemäß der folgenden Vorschrift hergestellt: Alle in Tabelle 1 angegebenen Bestandteile außer den Haftvermittlern wurden im Labordissolver mit Butterflyrührer (200 Umdrehungen/min) und Dissolverscheibe (2500 Umdrehungen/min) für 15 min unter statischem Vakuum und Kühlung dispergiert. Unter statischem Vakuum wird hierbei verstanden, dass die Apparatur bis auf einen Druck von 200 mbar evakuiert wird (dynamisches Vakuum) und danach die Verbindung zur Vakuumpupe getrennt wird. Die Kühlung wurde so gewählt, dass während der ganzen Herstellung eine Temperatur von 65 °C nicht überschritten wird. Im Anschluss wurden die Haftvermittler zugegeben und die Mischung für weitere 10 min unter statischem Vakuum dispergiert.

Die nachfolgenden Zahlenangaben zu den Formulierungen sind in Gewichtsteilen.

**Tabelle 1**

| **Beispiel Nr.** | **2-1** | **2-2*** | **2-3** | **2-4*** | **2-5*** | **2-6*** |
|---|---|---|---|---|---|---|
| Polymer aus Beispiel 1-1 | 457,56 | | | | | |
| Polymer aus Beispiel 1-2 | | 457,56 | | | | |
| Polymer aus Beispiel 1-3 | | | 128,8 | | | |
| Polymer aus Beispiel 1-4 | | | | 128,8 | 160 | |
| Polymer aus Beispiel 1-5 | | | | | | 160 |
| Mesamoll® | 436,5 | 436,5 | | | | |
| Fibadur® Schwarz 400724 | 1,62 | 1,62 | | | | |
| Tronox® 8300 | 49,32 | 49,32 | 14,30 | 14,30 | | |
| Cab-O-Sil® TS 720 | 20,52 | 20,52 | | | | |
| Socal® U1S2 | 761,76 | 761,76 | 234,1 | 234,1 | 240 | 240 |
| Dynasilan® VTMO | 26,82 | 26,82 | 6,45 | 6,45 | 9,6 | 9,6 |
| DBU | 1,26 | 1,26 | 0,45 | 0,45 | 0,16 | 0,16 |
| Tinuvin® 292 | 10,26 | | 2,15 | 2,15 | | |
| Tinuvin® 1130 | 11,7 | | 2,45 | 2,45 | | |
| Irganox® 1135 | 6,12 | | 1,30 | 1,30 | | |
| Dynasilan® 1505 | 8,28 | 8,28 | | | | |
| Dynasilan® 1146 | 8,28 | 8,28 | | | 4,80 | 4,80 |
| Jayflex® DINP | | | 106,15 | 106,15 | 96 | 96 |
| Dynasilan® 1189 | | | 3,85 | 3,85 | | |
| Gesamt | 1800,00 | 1800,00 | 500,00 | 500,00 | 510,56 | 510,56 |

| | | | | | | |
|---|---|---|---|---|---|---|
| *: Vergleichsbeispiel | | | | | | |

**Tabelle 2; NB: nicht bestimmt**

| **Beispiel Nr.** | **2-1** | **2-2*** | **2-3** | **2-4*** | **2-5*** | **2-6*** |
|---|---|---|---|---|---|---|
| Filmtrocknung [min] | 45 | 30 | 75 | 65 | 115 | >360 |
| Klebrigkeit 24h | Nein | Nein | Nein | Nein | Nein | Ja |
| Durchhärtung D [mm] 1 d | 4,3 | 3,6 | 4,2 | 4,2 | NB | NB |
| Durchhärtung D [mm] 3 d | 5,6 | 5,3 | 6,0 | 6,3 | NB | NB |

| | | | | | | |
|---|---|---|---|---|---|---|
| *: Vergleichsbeispiel | | | | | | |

Es zeigte sich, dass die erfindungsgemäßen Zusammensetzungen vergleichbare Werte bei der Durchhärtung zeigen wie die auf Basis von mit Dibutylzinndilaurat-katalysierten Alkoxysilangruppen enthaltenden Polyurethanen. Die Filmtrocknung liegt jeweils im Bereich von unter 60 min. Die Zusammensetzung aus Vergleichsbeispiel 2-5* (Zn-Katalyse des Alkoxysilangruppen enthaltenden Polyurethans) härtet nur langsam aus, was sich an hohen Filmtrocknungszeiten und Restklebrigkeit nach 24 h zeigt.

Aus den Formulierungen wurden Membranen mit einer Dicke von 2 mm gezogen und mechanisch untersucht.

**Tabelle 3**

| **Beispiel Nr.** | **2-1** | **2-2*** | **2-3** | **2-4*** | **2-5*** | **2-6*** |
|---|---|---|---|---|---|---|
| Shore A nach 14d 23 °C / 50 % r.H. | 30 | 41 | 13 | 23 | 48 | 45 |
| Shore A nach 28d 23 °C / 50 % r.H. | 30 | 41 | NB | NB | NB | NB |
| Zugfestigkeit [MPa] | 2,5 | 2,9 | 3,5 | 2,7 | 2,7 | 2,1 |
| Bruchdehnung [%] | 599 | 579 | 997 | 725 | 411 | 632 |
| Sekantenmodul bei 100% Dehnung [MPa] | 0,7 | 0,9 | 0,2 | 0,3 | 1,2 | 1,5 |
| Rückstellvermögen [%] | 90 | 93 | NB | NB | NB | NB |

Es zeigte sich, dass die ausgehärten erfindungsgemäßen Zusammensetzungen gegenüber den jeweiligen Vergleichsbeispielen, bei denen DBTL eingesetzt wurde, eine deutlich erniedrigtes Sekantenmodul bei 100% Dehnung erreichen, was insbesondere vorteilhaft für die Verwendung als niedrigmoduliger Baudichtstoff ist. Die zinnfreie Formulierung auf Basis von Zink-Verbindungen (2-6) zeigt vergleichbar hohe Werte bei Shore Härte und Sekantenmodul bei 100% Dehnung wie die zinnhaltige (2-5).

## Patentansprüche

1. Verfahren zur Herstellung von Alkoxysilangruppen enthaltenden Polyurethanen, umfassend den Schritt der Reaktion von
einer wenigstens eine NCO-Gruppe enthaltenden Verbindung mit
einer wenigstens ein Zerewitinoff-aktives H-Atom enthaltenden Verbindung
in Gegenwart einer Katalysatorkomponente,
wobei die wenigstens eine NCO-Gruppe enthaltende Verbindung und/oder die wenigstens ein Zerewitinoff-aktives H-Atom enthaltende Verbindung wenigstens eine Alkoxysilangruppe enthalten,
unter Erhalt eines Alkoxysilangruppen enthaltenden Polyurethans,
**dadurch gekennzeichnet, dass**
die Katalysatorkomponente einen Komplex eines Lanthanoids mit wenigstens einem beta-Diketonatliganden enthält und dass
die Katalysatorkomponente frei von organischen Zinnverbindungen ist.

2. Verfahren gemäß Anspruch 1, **dadurch gekennzeichnet, dass** das Lanthanoid Ytterbium(III) ist.

3. Verfahren gemäß Anspruch 1 oder 2, **dadurch gekennzeichnet, dass** der beta-Diketonatligand erhältlich ist durch Deprotonierung von Hacac (Acetylaceton), Hacac-F₇ (Perfluoroacetylaceton), Hbfa (Benzoyl-2-furanoylmethan), Hbpp (1,3-Bis(3-pyridyl)-1,3-propandion), Hbtfac (Benzoyltrifluoroaceton), Hbzac (Benzoylaceton), Hdbbm (Di(4-brom)benzoyl-methan), Hdcm (d,d-Dicampholylmethan), Hdmbm (4,4'-Dimethoxydibenzoylmethan), Hdmh (2,6-Dimethyl-3,5-heptandion), Hdnm (Dinaphthoylmethan), Hdpm (Dipivaloylmethan), Hdppm (Di(perfluoro-2-propoxypropionyl)methan), Hdtp (1,3-Di(2-thienyl)-1,3-propandion), Hfacam (3-(Trifluoroacetyl)-d-campher), Hfdh (6,6,6-Trifluoro-2,2-dimethyl-3,5-hexandion), Hfhd (1,1,1,2,2,6,6,7,7,7-Decafluoro-3,5-heptandion), Hfod (6,6,7,7,8,8,8-Heptafluoro-2,2-dimethyl-3,5-octandion), Hftac (2-Furyltrifluoroaceton), Hhfac (Hexafluoroacetylaceton), Hhfbc (3-(Heptafluorobutyryl)-d-campher), Hhfth (4,4,5,5,6,6,6-Heptafluoro-1-(2-thienyl)-1,3-hexandion), Hmfa (4-Methylbenzoyl-2-furanoylmethan), Hmhd (6-Methyl-2,4-heptandion), Hntac (2-Naphthoyltrifluoroaceton), Hpop (3-(5-Phenyl-1,3,4-oxadiazol-2-yl)-2,4-pentandion), Hppa (3-Phenyl-2,4-pentandion), Hpta (= Htpm) (Pivaloyltrifluoroaceton), Hptp (1-Phenyl-3-(2-thienyl)-1,3-propandion), H(t-cam) (3-(tert-Butylhydroxymethylen)-d-campher), Htfac (Trifluoroacetylaceton), Htfn (1,1,1,2,2,3,3,7,7,8,8,9,9,9-Tetradecafluoro-4,6-nonandion), Hthd (= Hdpm, Htmhd) (2,2,6,6-Tetramethyl-3,5-heptandion), Htnb (4,4,4,-Trifluoro-1-(2-naphtyl)-1,3-butandion), Htmod (2,2,6,6-Tetramethyl-3,5-octandion), Htrimh (2,2,6-Trimethyl-3,5-heptandion), Htod (2,2,7-Trimethyl-3,5-octandion), Htta (2-Thenoyltrifluoroaceton) oder einer beliebigen Mischung hiervon.

4. Verfahren gemäß einem der Ansprüche 1 bis 3, **dadurch gekennzeichnet, dass** der Komplex eines Lanthanoids mit wenigstens einem beta-Diketonatliganden Yb(acac)₃ ist.

5. Verfahren gemäß einem der Ansprüche 1 bis 4, **dadurch gekennzeichnet, dass** die wenigstens eine NCO-Gruppe enthaltende Verbindung wenigstens eine Alkoxysilangruppe enthält und dass die wenigstens ein Zerewitinoff-aktives H-Atom enthaltende Verbindung keine Alkoxysilangruppe enthält.

6. Verfahren gemäß einem der Ansprüche 1 bis 4, **dadurch gekennzeichnet, dass** die wenigstens eine NCO-Gruppe enthaltende Verbindung keine Alkoxysilangruppe enthält und dass die wenigstens ein Zerewitinoff-aktives H-Atom enthaltende Verbindung wenigstens Alkoxysilangruppe enthält.

7. Verfahren gemäß Anspruch 6, **dadurch gekennzeichnet, dass** die wenigstens ein Zerewitinoff-aktives H-Atom enthaltende Verbindung wenigstens eine primäre oder sekundäre Aminogruppe enthält.

8. Alkoxysilangruppen enthaltendes Polymer, **dadurch gekennzeichnet, dass** das Polymer einen Komplex eines Lanthanoids mit wenigstens einem beta-Diketonatliganden enthält und dass das Polymer frei von organischen Zinnverbindungen ist.

9. Polymer gemäß Anspruch 8, **dadurch gekennzeichnet, dass** das Polymer ein Polyurethan ist, das durch ein Verfahren gemäß einem der Ansprüche 1 bis 7 erhältlich ist.

10. Verfahren zur Herstellung eines härtbaren Polymers, **dadurch gekennzeichnet, dass** das Verfahren den Schritt des Kontaktierens eines Polymers gemäß Anspruch 8 oder 9 mit einem Siloxan-Kondensationskatalysator umfasst.

11. Verfahren gemäß Anspruch 10, **dadurch gekennzeichnet, dass** das Polymer weiterhin mit Wasser kontaktiert wird.

12. Härtbares Polymer, **dadurch gekennzeichnet, dass** das härtbare Polymer durch ein Verfahren gemäß Anspruch 10 oder 11 erhältlich ist.

13. Gehärtetes Polymer, **dadurch gekennzeichnet, dass** das gehärtete Polymer durch Härtung eines härtbaren Polymers gemäß Anspruch 12 erhältlich ist.

14. Gehärtetes Polymer gemäß Anspruch 13, **dadurch gekennzeichnet, dass** das gehärtete Polymer gegenüber einem Vergleichs-Polymer wenigstens eine der nachfolgenden Eigenschaften aufweist, wobei die jeweiligen Proben vor der Messung für 14 Tage bei 23 °C und 50 % relativer Luftfeuchtigkeit gelagert wurden:
Shore A-Härte (DIN 53505) : ≤ 90% des Vergleichs-Polymers;
Prozentwert der Bruchdehnung (DIN EN 53504, Zuggeschwindigkeit: 200 mm/min, S2 Prüfkörper): ≥ 101% des Prozentwerts des Vergleichs-Polymers;
Sekantenmodul (EN ISO 8339, 100% Dehnung): ≤ 90% des Vergleichs-Polymers;
und wobei das Vergleichs-Polymer wie das gehärtete Polymer hergestellt wurde, jedoch mit Dibutylzinndilaurat in gleicher molarer Menge anstelle des Komplexes des Lanthanoids mit wenigstens einem beta-Diketonatliganden in der Katalysatorkomponente im Verfahren wie in einem der Ansprüche 1 bis 7 beschrieben wurde.

15. Verwendung eines härtbaren Polymers gemäß Anspruch 12 und/oder des gehärteten Polymers gemäß Anspruch 13 oder 14 als Dichtstoff, Klebstoff oder Beschichtungsmaterial.
